(19) Europäisches Patentamt
European Patent Office
Office européen des brevets

(11) Publication number: 0 492 036 A2

# (12) EUROPEAN PATENT APPLICATION

(21) Application number: 91105018.5

(22) Date of filing: 28.03.91

(51) Int. Cl.5: C08K 7/14, C03C 25/02, C08K 5/54, C08J 5/08

(30) Priority: 20.12.90 US 627510

(43) Date of publication of application: 01.07.92 Bulletin 92/27

(84) Designated Contracting States: DE GB IT SE

(71) Applicant: E.I. DU PONT DE NEMOURS AND COMPANY
1007 Market Street
Wilmington Delaware 19898(US)

(72) Inventor: Banerjee, Shoibal
2404 Creekside Drive
Newark, Delaware 19711(US)

(74) Representative: Abitz, Walter, Dr.-Ing. et al
Abitz, Morf, Gritschneder, Freiherr von Wittgenstein Postfach 86 01 09
W-8000 München 86(DE)

## (54) Glass fiber-reinforced fluoropolymer compositions.

(57) Pelletized composition of certain glass fiber-containing fluorocopolymers made by wire-coating molten fluorocopolymer onto a continuous glass fiber to a desired thickness and cutting or chopping the coated glass fiber into pellets of the desired length can be injection-molded into articles having excellent tensile properties and high heat distortion temperatures.

FIG. 1

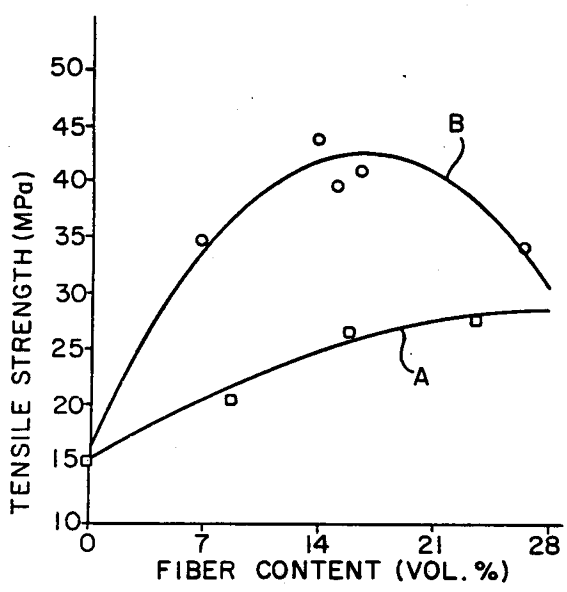


EP 0 492 036 A2

## BACKGROUND OF THE INVENTION

This invention relates to glass fiber-reinforced fluoropolymer compositions having high tensile strength and high heat distortion temperature.

It is well known to incorporate discontinuous glass fibers into a polymer matrix in order to improve the tensile strength and other physical properties of a given polymer. This is usually done by melt-blending the polymer with the glass fibers in an extruder and either directly extruding into various shapes or first pelletizing and then injection molding. This technique causes breakage of glass fibers to short lengths, so that the maximum improvement of mechanical properties such as, for example, toughness, which would be possible with longer fibers, is not attained. Further, in the case of high-melting polymers such as many fluoropolymers within the scope of the present invention, degradation of the sizing normally applied to the glass fibers occurs, resulting in dark color.

It is known in the electrical wire manufacturing industry to apply electrical insulation to a metallic wire by a process know as pultrusion. In this process, a monomer or an oligomer is coated onto the wire, which is then passed through an oven to cause polymerization and/or curing. Certain polymers which are sufficiently stable in the melt can be extruded onto the wire directly from the melt. This process is known as wire coating.

The melt-coating process also can be used for coating glass fibers. This process is identified as Fiberfil® process and described in Engineering Design Handbook, published by U.S. Army Materiel Development and Readiness Command as DARCOM-P 706-314 (April, 1981). Six to eight strands with about 100-150 individual filaments each are coated with a thermoplastic melt. The coated strand is then cut into pellets. According to this publication, the glass in the pellets is not readily dispersed or wetted by the plastic. Also, depending on molding conditions, only about half of the glass is dispersed in the molded item. This lack of homogeneity creates problems for the production of complicated or thin-walled parts. However, this process is practiced commercially in order to increase toughness, especially with thermoplastic resins which have low or moderate melting points, up to about 230 °C, including polyethylene as well as certain polyamides and polyesters.

Although the Fiberfil® fiber-coating process appears to suffer from the problems mentioned in the DARCOM publication, nevertheless it permits one to make glass fiber-containing polymer pellets in which the fibers are longer than they would be in conventional melt-compounding operations, and those pellets in turn can be expected to be suitable for injection molding into articles having good mechanical properties. Further, the contact time of glass fiber with molten polymer in the melt-coating process is much shorter than in the melt-compounding process, and thus excessive deterioration of the sizing on the glass fibers at the polymer melt temperature and concomitant weakening of the polymer-glass interface can be avoided.

British Patent 1,399,789 of E. I. du Pont de Nemours & Company discloses glass compositions with ethylene/chlorotrifluoroethylene or ethylene/tetrafluoroethylene copolymers. Those compositions are prepared by melt-compounding, especially in an extruder or on a roll mill, and are said to have heat distortion temperatures at a 50% glass content of about 230-236 °C. While compositions having such a high glass content can be compression molded, they often have such high viscosities that they cannot be injection molded.

It would be desirable to be able to provide injection-moldable compositions of high melting fluoropolymers containing long glass fibers, being free of discoloration or other signs of interface deterioration, and exhibiting significantly improved mechanical properties at a lower glass fiber content.

## SUMMARY OF THE INVENTION

According to the present invention, there is provided a pelletized composition suitable for injection molding articles characterized by unexpectedly high tensile strength and heat distortion temperature, said composition consisting essentially of a glass fiber coated substantially uniformly on its entire surface with a layer of a thermoplastic copolymer of at least two monomers, which are fluorocompounds selected from the group consisting of tetrafluoroethylene, perfluoroalkylenes $R_fCF=CF_2$ where $R_f$ is a primary perfluoroalkyl group with 1-5 carbon atoms; chlorotrifluoroethylene, perfluoro(alkyl vinyl ethers) $RgOCF=CF_2$ where $R_g$ is $R_f$ or a primary perfluoroalkyl group containing ether oxygen and 4-12 carbon atoms; and a fluorodioxole having the following formula:

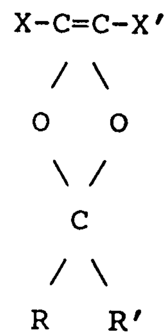

where X is chlorine or fluorine; X' is chlorine, fluorine, or a $C_1$-$C_3$ perfluoroalkyl; and each one of R and R' independently is fluorine, chlorine, or a $C_1$-$C_4$ perfluoroalkyl group; provided that either at least one of X, X', R, and R' is fluorine or at least one of X', R, and R' is a perfluoroalkyl; said copolymer being melt-processable at a temperature of at least about 260°C and constituting about 70 - 95% by volume of said pelletized composition;

the pellets being prepared by wire-coating a glass fiber containing on its surface a coupling agent with molten copolymer and cutting the thus coated glass fiber to the desired length.

## BRIEF DESCRIPTION OF THE DRAWINGS

The drawings are plots of selected properties of certain representative compositions of the present invention.

Fig 1 is a plot of tensile strength vs. fiber content of wire-coated and melt-extruded compositions of a copolymer of tetrafluoroethylene with perfluoro(propyl vinyl ether).

Fig. 2 is a plot of flex modulus vs. fiber content for the same compositions.

Fig. 3 is a plot of heat distortion temperature vs. fiber content for both wire-coated and melt-extruded compositions.

Fig. 4 is a plot of tensile strength vs. fiber content for three different compositions containing different concentrations of polymer end groups.

## DETAILED DESCRIPTION OF THE INVENTION

Definition: As used herein, the term "fiber" is used in its broadest sense and includes both single filaments and multifilament shaped structures such as, e.g., strands, rovings and yarns, wherein the individual filaments are generally oriented lengthwise and may be twisted together, adhered to one another, or otherwise made to maintain the integrity of the shaped structure.

The pelletized composition of the present invention is produced by a process comprising melt-coating the copolymer to a desired thickness onto a continuous glass fiber containing on its surface a coupling agent and cutting or breaking the coated fiber into fragments of desired length. This is normally done by extruding molten copolymer through a die onto such a continuous, heated or unheated, glass fiber in a manner generally known to the art of wire-coating or fiber-coating. The copolymer must be at a sufficiently high temperature to be able to flow in a uniform manner and to form a coating of the desired thickness on the glass fiber.

The preferred copolymers for use in the present invention are copolymers of tetrafluoroethylene, for example, with perfluoro(2,2-dimethyl-1,3-dioxole) or with at least one of hexafluoropropene, perfluoro(propyl vinyl ether), and perfluoro(methyl vinyl ether).

Many such polymers are generally known and some are commercially available. E. I. du Pont de Nemours and Company, the assignee of the present invention, offers commercially various perfluorocopolymers under such trade names as, for example, Teflon® FEP fluorocarbon resin, Teflon® PFA fluorocarbon resin, Teflon® AF fluorocarbon resin, Viton® fluoroelastomer, and Kalrez® fluoroelastomer.

All the monomers are known and either can be made or can be purchased from one or more sources. For example, chlorotrifluoroethylene and hexafluoropropylene are available from SCM Specialty Chemicals, Gainesville, Fla. Perfluoro(propyl vinyl ether) and its copolymers are described in U.S. Patents Nos. 3,180,895 and 3,132,123, both to Harris et al. Copolymers of tetrafluoroethylene are described, i.a., in U.S. Patents Nos. 2,468,664 to Hanford and 3,987,030 to Resnick. Some copolymers of perfluoro(2,2-dimethyl-1,3-dioxole) are described in U.S. Patents 4,431,786, 4,530,569 and 4,754,009, all to Squire. Other dioxoles and copolymers of other dioxoles are described in U.S. Patent 4,565,855 to Anderson et al.

Many of the above copolymers are melt-processable above 300 ° C, so that the wire-coating process will often be conducted at temperatures above 300 ° C.

The glass fiber used according to the process of the present invention is a commercial product available from many sources, including Pittsburgh Plate Glass Co. (PPG) and Owens-Corning Fiberglass Co. (OCF). The fibers contain a coupling agent, which improves their adhesion to the polymer. The coupling agent may vary with the particular glass type or manufacturer but it often contains various organotitanates and silanes. Representative organotitanates include, for example, tetraisopropyl di(dioctylphosphito) titanate; titanium dimethacrylate oxyacetate; isopropyl diisostearyl methacryl titanate; isopropyl tricumylphenyl titanate; and isopropyl tri(dioctylpyrophosphato) titanate. Representative silanes include, for example, 3-aminopropyltriethoxysilane, vinyl triethoxysilane, and 3-chloropropyltrimethoxysilane.

The commercial glass fiber itself normally comes as a bundle containing about 600-1000 individual filaments having a thickness of about 1-50 micrometers, most often less than about 20 micrometers, and especially in the 13-17 micrometer range. This usually is a soft glass fiber but it could also be high-melting, borosilicate glass, except that the increased cost of such glass would not be justified in many uses of those compositions. The bundle may be either flat or three-dimensional, but for the purpose of this invention the shape of the bundle is not critical. The individual filaments are held together by means of a sizing, which serves several purposes, including lubrication, handling, and adhesion improvement. Commercial glass fiber is graded according to its fineness, which is expressed as a ratio of length to weight in yards per pound, and the commercial designation of the fiber contains this number as the last three digits. For example, for a fiber having a commercial designation 473-CB-675, 675 yards weigh 1 lb; or 1360 m weigh 1 kg. The thickness of the fiber may vary from a fraction of a millimeter to several millimeters, depending on the thickness and number of individual filaments.

The preferred amount of copolymer in the particulate compositions of the present invention is about 80-90 % by volume.

The coating rate depends on the equipment as well as on the amount of copolymer add-on to the fiber. Generally, an extruder equipped with a wire-coating crosshead of the tubular type is used. The crosshead normally is circular but it could be of a different shape, such as, for example, rectangular or triangular. The copolymer tube extruded around the glass fiber may be drawn down by vacuum applied through the crosshead. The extruder may be a single screw, a twin screw, or an interlocking screw type. Typical commercial equipment includes, for example, the 1.5-inch (3.375 cm) Entwistle wire-coating extruder and the Maillefer optical fiber-coating extruder. However, similar commercial equipment of other manufacturers would be equally suitable. For the purpose of the present disclosure and claims, the term "wire-coating" is used herein indiscriminately with respect to either wire-coating or fiber-coating equipment. With a tetrafluoroethylene/perfluoropropyl vinyl ether copolymer, the present inventor was able to achieve in the Maillefer extruder a coating rate of 244 m/min at 25 weight % of glass fiber. This translates into a production rate of 0.91 kg/min of continuously coated fiber. Both types of extruders are well known to the industry and normally come equipped with suitable dies.

If the polymer is crystalline, it is applied at a temperature of usually at least about 30 ° C above its crystalline melting point; if the polymer is amorphous, it is applied at a convenient temperature at which it flows readily. It has been found that, in the case of copolymers made solely from perfluoromonomers, the presence of certain end groups, such as, for example, -COF, $-CH_2OH$, and -COOH groups, which usually are present in fluoropolymers, improves the adhesion of the polymer to the glass fiber and leads to compositions having higher tensile strength. Those functional groups are formed during the copolymerization process and are usually contributed by the free radical polymerization initiators, as well as by the reaction of such initially formed groups with hydrogen fluoride, which normally is present in the copolymerization reaction. Contrary to customary applications involving melt-processing, where such end groups, sometimes referred to herein as functional end groups, are considered undesirable and are removed, for example, by fluorination of the perfluoropolymer, here such groups are desired and their concentration can even be increased on purpose. Normally, those functional end groups formed in the polymerization process cannot be avoided. However, as the polymer chain length increases, the weight percent concentration of those end groups naturally decreases. Therefore, in order to increase the weight percent concentration of the functional end groups, one way would be to stop copolymerization before the molecular weight of the copolymer becomes too large (or, the chain becomes too long). Those skilled in the art would know how to adjust the selection of polymerization medium, initiator, and chain transfer agent to control the molecular weight and the predominant type of the functional end groups. The minimum recommended amount of functional end groups in these copolymers should be about 50 per million carbon

atoms and can be as high as 250 per million carbon atoms, or even more. Copolymers of perfluoromonomers with unfluorinated comonomers such as, for example, alkylenes adhere very well to the glass fibers coated with a coupling agent even in the absence of functional end groups, but for the copolymers used in the present invention having such functional end groups is a definite advantage.

The chopped copolymer-coated glass fibers, which will be occasionally referred to herein as pellets, obtained according to this invention, can be injection-molded into a variety of articles by using conventional injection-molding machines, which may be either of the ram type or the screw type; and when of the screw type, can be equipped with a general purpose screw or a mixing screw. The latter type provides a more uniform blend but may cause more glass fiber breakage. Naturally, certain shapes or sizes will be more difficult to fabricate than some other shapes or sizes. For example, thin or complex molds, molds with small gates, and molds with multiple cavities can be expected to present certain difficulties because of reduced flow of glass fiber-reinforced copolymer, as compared with the unreinforced material, and high temperatures at which this operation is conducted, usually above about 300 °C. Typical injection-molding equipment suitable in the fabrication of articles from particulate compositions of the present invention is available, for example, from Van Dorn Plastic machinery, Cleveland, Ohio; Cincinnati Milacron, Inc., Batavia, Ohio; and HPM Corporation, Mount Gilead, Ohio.

While one might have hoped to be able to apply high-melting fluorocopolymers to glass fiber by the wire-coating technique without substantial deterioration of the copolymer/glass interface, and thus obtain a pelletized composition suitable for injection molding, it was totally unexpected that articles injection-molded from such a composition would have exceptionally high tensile strength and heat distortion temperature and thus would be particularly useful in a number of high technology applications, including aerospace, automotive, and industrial uses. Typical such uses include, for example automotive parts exposed to high engine temperatures such as, for example, oil caps, cable guides, battery casings, etc.; rocket fuel containers; and impellers for the chemical process industry.

This invention is now illustrated by the following examples of certain representative embodiments thereof, where all parts, proportions, and percentages of materials are by weight unless otherwise indicated. All the units not originally obtained in the SI system have been converted to the SI system.

Example 1 Preparation of long glass fiber-reinforced copolymer of tetrafluoroethylene (TFE) with perfluoro(propyl vinyl ether) (PPVE) having a PPVE comonomer content of 3.5-4%.

Continuous glass roving, OCF 473-CB-675, made of filaments having a diameter of 13 micrometers and containing on its surface an aminosilane coupling agent, was coated with the TFE/PPVE copolymer in a Maillefer wire-coating unit comprising an extruder and a die. The die and crosshead temperature were 396 °C and 382 °C respectively; the screw rotation speed was 5 rpm; the cone size was 6.35 mm, and the die and the guide tip diameters were 5 mm and 4 mm, respectively. The roving was coated at a rate of 22.3 cm/sec to a thickness of 60 micrometers. This thickness corresponds to a polymer loading of 50% of the final product. The polymer add-on can be controlled, among others, by adjusting the line speed and the polymer feed rate and can be varied within very broad limits.

The coated fiber was then chopped into 3.2 mm long pellets in a glass fiber cutter (Finn & Fram Model 80 cutter with positive ejection cutting head). These pellets were used as a concentrated masterbatch, containing the highest level of glass fibers. The pellets were injection molded into test samples in a 0.186 kg shot size injection molding machine. The temperature profile used for injection molding was as follows: rear, 320-327 °C; center, 325-355 °C; front, 330-360 °C; nozzle, 350-370 °C; and mold, 210 °C. The boost/inject/hold cycle was 3/20/20 seconds; the boost injection pressure was 5.5-13.5 MPa; the ram speed was "fast"; the screw speed was 60 rpm; and the back pressure was 345 kPa. In some runs, the pellets were dry-blended with pellets of additional copolymer to vary the glass content of the molded samples.

Comparative Example 1

Preparation of short glass fiber-reinforced TFE/PPVE copolymer pellets by melt-compounding.

The same TFE/PPVE copolymer was melt-blended with commercially available 3.2 mm chopped OCF 473-CB-675 glass fiber roving having a filament diameter of 13 micrometers in a 3 cm twin screw extruder. The glass was fed into the extruder through a side stuffer using an Englehardt weight loss feeder. Three different glass loadings were prepared by varying the glass feeding rate. The temperature profile of the extruder was, from rear to front, 265 °C-341 °C-354 °C-355 °C-360 °C, the last temperature being that of the die. The extrudate was chopped into 3.2 mm pellets.

The extruded pellets were injection-molded using the same machine and molding conditions as in Example 1.

Figures 1 and 2 are plots of tensile strength (ASTM D 635 method) and flex modulus (ASTM D 790

method), respectively, vs. volume fraction of glass fibers in the injection-molded samples for both the wire-coated and the melt-compounded compositions. Curves A in both figures represent the melt-compounded compositions, while curves B represent the wire-coated compositions. The number average fiber lengths in the injection-molded samples were 10.1 and 1.5 micrometers for the wire-coated and melt-compounded materials, respectively. The fiber lengths were measured by image analysis of ashed samples using a Quantimet image analyzer. The volume fraction of the glass fiber was determined by density measurements.

For the wire-coated compositions, the maximum tensile strength was obtained at a glass fiber content of about 16% and was 41 MPa. For the melt-compounded compositions, the maximum tensile strength was obtained at a glass fiber content of about 24 % and was 28 MPa. The flex modulus of the wire-coated compositions did not show a maximum within the glass fiber range tested.

The fiber length in the injection molded samples was nearly sevenfold greater when wire-coating was used instead of melt-compounding. This in turn resulted in significantly enhanced tensile strength and flex modulus shown by the wire-coated material (Figures 1 and 2). The decrease in tensile strength of the wire-coated samples above about 16 volume % is believed to be due to less effective dispersion of the individual filaments in the polymer matrix.

Heat distortion temperatures at a pressure of 1.82 MPa also were determined for the wire-coated and the melt-compounded injection-molded samples. In addition to the above-described two types of pellets, another type of pellets was obtained by chopping the same wire-coated fiber as in Example 1 into 12.7 mm lengths. Those pellets gave injection-molded samples in which the number average fiber length was 22.7 micrometers.

Fig. 3 is a plot of heat distortion temperature vs. volume fraction (%) of fibers. Curve A represents the melt-compounded sample; curve B represents the wire-coated sample having a fiber length of 10.1 micrometers; and curve C represents the wire-coated sample having a fiber length of 22.7 micrometers. It can be seen that the wire-coated samples, containing much longer glass fibers, have vastly superior heat distortion temperatures, compared with the melt-compounded sample. The formation of a network of longer fibers gives the injection molded test bars from wire-coated pellets dimensional integrity at high temperatures.

## Example 2

Preparation of glass fiber-reinforced TFE/PPVE copolymer with varying levels of copolymer functional end group concentration.

TFE/PPVE copolymers having three different levels of functional group concentration were used. The end group concentration was measured according to the method described in U.S. Patent 3,674,758 to Carlson. Post-fluorinated TFE/PPVE copolymer, which had no functional end groups, was used in one case. See, for example, U.S. Patent No. 4,743,658 to Imbalzano et al. for this procedure. A blend of 30 parts of TFE/PPVE copolymer containing about 166 functional end groups per million carbon atoms with 70 parts of TFE/PPVE copolymer containing no functional end groups was used in the second case. The functional end group concentration in this blend thus was about 50 per million carbon atoms. Nonfluorinated TFE/PPVE copolymer containing 150 -COF end groups per million carbon atoms was used in the third case. All the glass fiber-reinforced test samples were prepared as described in Example 1.

Figure 4 is a plot of tensile strength (according to ASTM D 638) vs. volume % of glass fibers for these three blends. The maximum tensile strength was obtained at 10-15 volume % of glass fibers, depending on the functional group concentration. For 150 groups/MM C atoms (curve N), this was 42 MPa; for 50 groups/MM C atoms (curve M), 29 MPa; and for 0 groups/MM C atoms (curve K), 21 MPa. It can be seen from Fig. 4 that at any given fiber content, the tensile strength of the blend increased approximately in proportion to the functional end group concentration. This illustrates the general proposition that the presence of functional end groups increases bonding of perfluorocopolymer to the coupling agent on the glass fibers.

## Example 3

Comparison of different types of glass fibers.

In this example, different types of glass fibers were evaluated. Besides OCF473-CB-675, two other Owens-Corning glass fibers were experimented with, namely, OCF193A-K675 and OCF193A-M450. The former had a filament diameter of 13 micrometers and the latter had a filament diameter of 17 micrometers. Both types of fibers have a sizing which makes fiber bundles easily dispersible in polymer matrix and is

resistant to higher temperatures than that on OCF473-CB-675. The matrix copolymer was the same as in Example 2. The tensile strength and initial modulus data for these experiments are given below:

| | Glass Fiber Type and Content (%) | | |
|---|---|---|---|
| | 473-CB-6875 (32) | 193-K675 (30) | 193A-M450 (32) |
| Tensile Str. (kPa) | 106,869 | 101,353 | 106,179 |
| Initial Modulus (MPa) | 10,687 | 11,825 | 15,444 |

As can be seen, compositions with the larger diameter glass fibers (last column) had a tensile strength comparable to that of the other two compositions (first two columns), in which the glass fibers had a smaller diameter. However, the initial modulus was much higher for the composition containing larger diameter fibers.

## Claims

1. A pelletized composition suitable for injection molding articles inherently possessing high tensile strength and high heat distortion temperature, said composition consisting essentially of a glass fiber coated substantially uniformly on its entire surface with a layer of a thermoplastic copolymer of at least two monomers, which are fluorocompounds and is selected from the group consisting of tetrafluoroethylene, perfluoroalkylenes $R_fCF=CF_2$,where $R_f$ is a primary perfluoroalkyl group with 1-5 carbon atoms; chlorotrifluoroethylene, perfluoro(alkyl vinyl ethers) $R_gOCF=CF_2$, where $R_g$ is $R_f$ or a primary perfluoroalkyl group containing ether oxygen and 4-12 carbon atoms; and a fluorodioxole having the following formula:

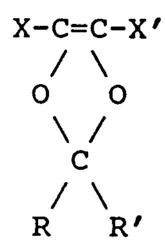

where X is chlorine or fluorine; X' is chlorine, fluorine, or a $C_1$-$C_3$ perfluoroalkyl; and each one of R and R' independently is fluorine, chlorine, or a $C_1$-$C_4$ perfluoroalkyl group; provided that either at least one of X, X', R, and R' is fluorine or at least one of X', R, and R' is a perfluoroalkyl; said copolymer being melt-processable at a temperature of at least about 260°C and constituting at least about 70-95% by volume of said pelletized composition;

the pellets being prepared by wire-coating a glass fiber containing on its surface a coupling agent with molten copolymer and cutting the thus coated glass fiber to the desired length.

2. A composition of Claim 1 wherein the thermoplastic copolymer is a copolymer of two perfluoromonomers.

3. A composition of Claim 2 wherein one of the perfluoromonomers in the copolymer is tetrafluoroethylene.

4. A composition of Claim 3 where the other perfluoromonomer is selected from the group consisting of perfluoro(2,2-dimethyl-1,3-dioxole), hexafluoropropene, perfluoro(propyl vinyl ether), and perfluoro-(methyl vinyl ether).

5. A composition of Claim 2 wherein the copolymer has functional end groups belonging to at least one type from the group consisting of -COF, $-CH_2OH$, and -COOH, the total amount of such end groups being about 50-250 per million carbon atoms.

6. A composition of Claim 1 wherein the coupling agent is an aminosilane.

7. A composition of Claim 1 wherein the wire-coating process is conducted at a temperature above 300 ° C.

8. A composition of Claim 1 wherein the glass fiber is composed of individual filaments having a thickness of 1-50 micrometers.

9. A composition of Claim 13, wherein the diameter of the individual filaments in the glass fiber is about 13-17 micrometers.

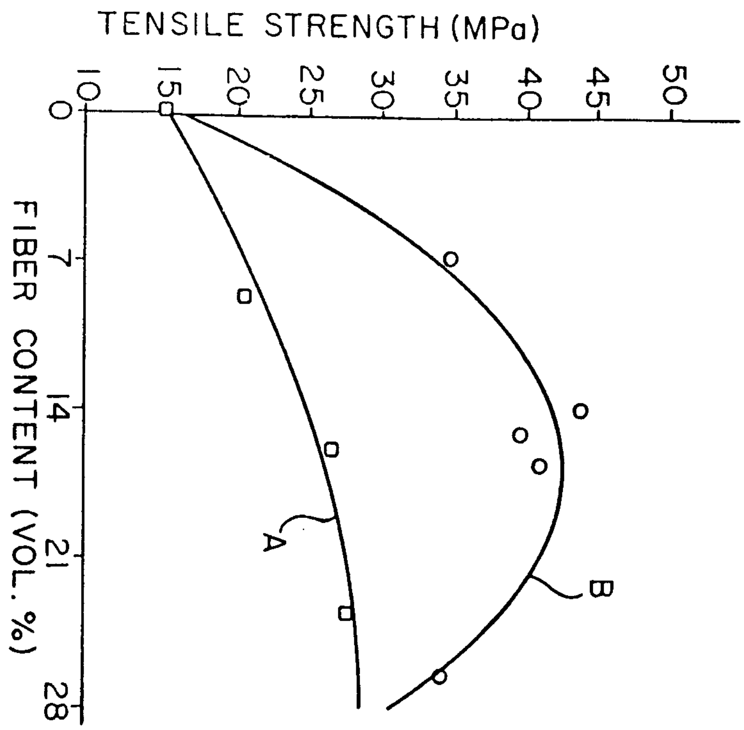
TENSILE STRENGTH (MPa)
10
15
20
25
30
35
40
45
50
0
7
14
21
28
FIBER CONTENT (VOL. %)
A
B

FIG. 1

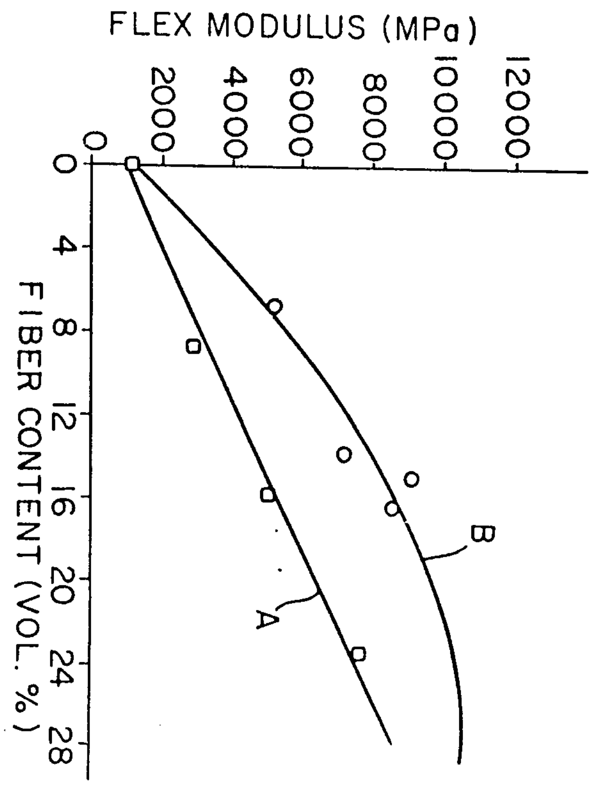
FLEX MODULUS (MPa)
0
2000
4000
6000
8000
10000
12000
0
4
8
12
16
20
24
28
FIBER CONTENT (VOL. %)
A
B

FIG. 2

FIG. 4

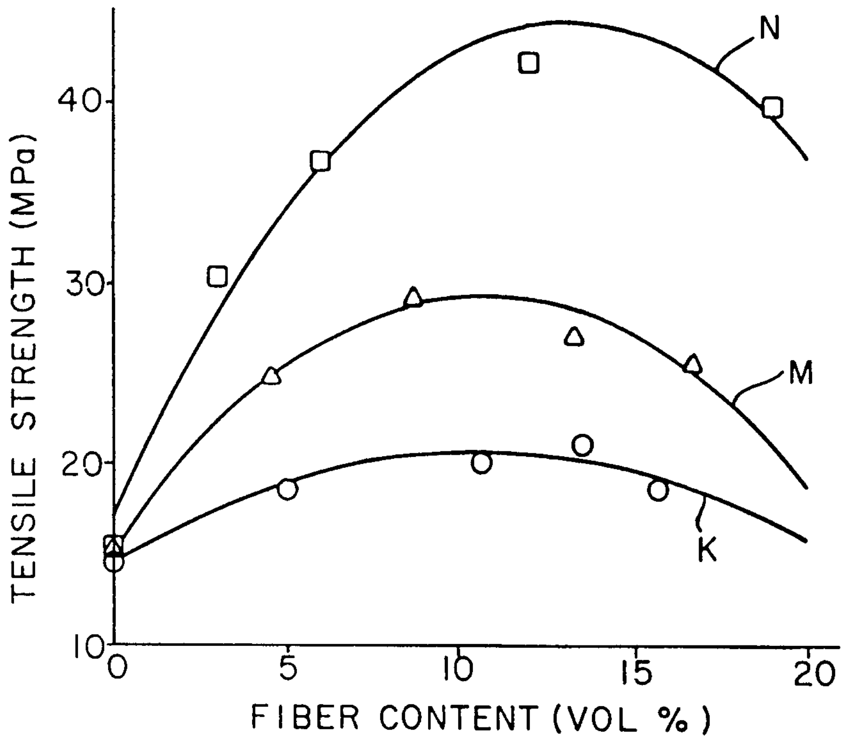
TENSILE STRENGTH (MPa)
10
20
30
40
N
M
K
0
5
10
15
20
FIBER CONTENT (VOL %)

FIG. 3

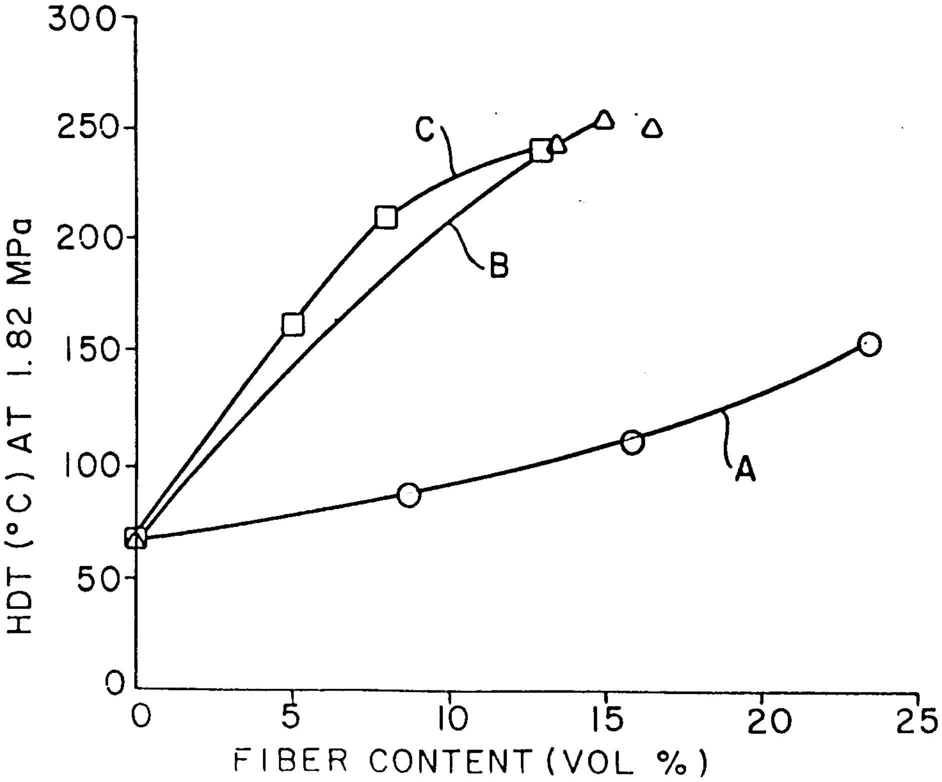
HDT (°C) AT 1.82 MPa
0
50
100
150
200
250
300
C
B
A
0
5
10
15
20
25
FIBER CONTENT (VOL %)